# EUROPÄISCHE PATENTANMELDUNG

(11) **EP 1 374 722 A2**
(43) Veröffentlichungstag der Anmeldung: **02.01.2004**
(21) Anmeldenummer: 03013490.2
(22) Anmeldetag: 26.06.2003
(51) Int. Cl.: A45F 3/04, A45F 4/02, A45F 4/06, A45F 4/08

(54) **Tragbare Vorrichtung zum Transport von Gegenständen**

(30) Priorität: 27.06.2002 DE 10228844
(71) Anmelder: Koch, Dagmar, 85570 Markt Schwaben (DE); Miler, Marjan, 85570 Markt Schwaben (DE)
(72) Erfinder: Koch, Dagmar, 85570 Markt Schwaben (DE); Miler, Marjan, 85570 Markt Schwaben (DE)

(57) **Zusammenfassung**

Die vorliegende Erfindung betrifft eine auf dem Rücken tragbare Vorrichtung zum Transport von Gegenständen, die in eine Sitzvorrichtung und/oder eine Liegevorrichtung umwandelbar ist. Hierbei ist die Vorrichtung in ihrer Grundform als Rucksack ausgebildet.

## Beschreibung

Die vorliegende Erfindung betrifft eine auf dem Rücken tragbare Vorrichtung zum Transport von Gegenständen, die in eine Sitzvorrichtung und/oder eine Liegevorrichtung umwandelbar ist sowie ein Verfahren zur Umwandlung derselben. Die Vorrichtung ist beispielsweise besonders zum Einsatz als Rucksack in einem oder mehreren der Bereiche Camping, Trekking, Wandern, Bergsteigen, Jagd, Fischerei und/oder Armee bzw. Heer geeignet.

Heutige Systeme zum Transport von Gegenständen bzw. Rucksäcke werden häufig im Bereich der Freizeit und Sport und insbesondere im Bereich sogenannter "Outdoor"-Aktivitäten eingesetzt. Hierbei dienen sie vornehmlich dem Transport von Kleidung, Nahrungsmitteln und sonstigen Accessoires, die zum Leben in der Natur bzw. zur Erfüllung der gestellten und sich stellenden Anforderungen notwendig sind. Hierbei handelt es sich vor allem um eine Vielzahl von Gegenständen, Hilfsmitteln und Vorrichtungen mit speziellen Funktionen und speziellem Einsatzbereich, insbesondere um Zelte, Isomatten, Luftmatratzen, Sitzpolster etc.

Aus den unterschiedlichen Bedürfnissen und Anforderungen, wie beispielsweise Schutz gegen Regen oder die Übernachtungsmöglichkeit, resultiert eine Vielzahl an zu transportierenden Gegenständen, ein großes Transportvolumen, sowie ein hohes Transportgewicht. Des weiteren bewirkt die Nutzbarmachung, d. h. das Auspacken und Aufstellen bzw. das Abbauen und Verstauen derartiger Accessoires Einschränkungen in der Bewegungs- und Entscheidungsfreiheit sowie im erwünschten Komfort.

Oftmals bereitet es Schwierigkeiten, einen Rucksack im Falle einer Rast zum Anlehnen zu verwenden. Der Rucksack ist in seiner Länge entweder zu kurz, um den Kopf zu stützen, oder er weist, an eine Wand oder ähnliches angelehnt, eine ungünstige Neigung auf, so daß ein Anlehnen, besonders des Kopfes unbequem oder gar unmöglich ist. Hinzu kommt, daß der Benutzer, lehnt er sich an den Rucksack an, unbequem auf dem Boden sitzt.

Des weiteren ergeben sich die Defizite und Nachteile der bekannten Gegenstände. So ist beispielsweise die Liegefläche eines Zeltes häufig nicht eben oder gerade und leitet Feuchtigkeit vom Boden her weiter. Auch ist ein Befall von Käfern und/oder sonstigen Insekten bzw. Kleinsttieren nicht auszuschließen. Im Fall von Regen oder Feuchtigkeit ist weiterhin mit einer Durchnässung der einzelnen Gegenstände zu rechnen, was sich wiederum negativ auf Handhabung, Zweckerfüllung sowie Transport (Gewichtszunahme) auswirkt. Aufblasbare Accessoires wie beispielsweise eine Luftmatratze, unterliegen in der Regel einem hohen Eigengewicht sowie der ständigen Gefahr, bodenseitig beschädigt zu werden, und damit ihre erwünschte Funktion zu verlieren.

Der vorliegenden Erfindung liegt daher die Aufgabe zugrunde, eine Vorrichtung bereitzustellen, mit dem die Nachteile des Standes der Technik überwunden werden.

Diese Aufgabe wird mit den Merkmalen der Patentansprüche gelöst. Die Erfindung geht von dem Grundgedanken aus, eine auf dem Rücken tragbare Vorrichtung zum Transport von Gegenständen bereitzustellen, die beispielsweise in eine Sitzvorrichtung und/oder eine Liegevorrichtung umwandelbar ist. Hierbei ist die Vorrichtung in ihrer Grundform als Rucksack ausgebildet.

In einer bevorzugten erfindungsgemäßen Ausführungsform ist die Vorrichtung derart ausgebildet, daß sie in eine Sitzvorrichtung umwandelbar ist. Hierbei weist die Vorrichtung bevorzugt ein zu einem Kopfteil umwandelbares Hüftteil sowie eine Sitzfläche auf. In bevorzugten erfindungsgemäßen Ausführungsformen können die einzelnen Elemente einteilig, mehrteilig, fest oder lösbar verbunden mit der Vorrichtung ausgeführt sein.

Eine weitere bevorzugte erfindungsgemäße Ausführungsform ermöglicht die Umwandlung der Vorrichtung in eine hängende Sitzvorrichtung, wobei an der Vorrichtung Seile bzw. Gurte oder Ähnliches derart angeordnet sind, daß unter Zuhilfenahme eines Baumes etc. eine hängende Sitzvorrichtung geschaffen werden kann.

In einer weiteren bevorzugten erfindungsgemäßen Ausführungsform ist die Vorrichtung in eine Liegevorrichtung umwandelbar. Hierbei weist die Vorrichtung ein zu einem Kopfteil umwandelbares Hüftteil, eine Liegefläche und einen Beinbereich sowie einen teilbaren und/oder in seiner Position veränderlichen Stauraum auf.

In einer weiteren bevorzugten erfindungsgemäßen Ausführungsform weist die Vorrichtung Gurte und/oder Seile oder dergleichen auf, so daß die Liegefläche hängend, beispielsweise zwischen zwei Bäumen oder dergleichen, ausgebildet werden kann, etwa als Hängematte.

In weiteren bevorzugten Ausführungsformen der Erfindung weist die Vorrichtung ein Rollfahrwerk und einen Teleskopgriff oder dergleichen auf, so daß die Vorrichtung vom Nutzer über längere ebene Strecken hinweg (beispielsweise am Flughafen) bequem gezogen werden kann.

In weiteren bevorzugten Ausführungsformen weist die Vorrichtung einen Sonnen- bzw. Regenschutz und/oder ein Moskitonetz auf, so daß der Benutzer von den jeweiligen negativen Einflüssen geschützt wird.

Weitere oder zusätzliche bevorzugte Ausführungsformen sind:
i) eine Vorrichtung zum Transport von Gegenständen zum Tragen auf dem Rücken, aufweisend einen Rahmen, dadurch gekennzeichnet, daß die Vorrichtung ein Hüftteil aufweist, das in ein Kopfteil umwandelbar ist, wobei das Hüftteil am Rahmen so lösbar befestigt ist, daß es zum Kopfteil umklappbar und erneut am Rahmen lösbar befestigbar ist;
ii) eine Vorrichtung wie i), wobei ein Griff in der Nähe des Hüftteils am Rahmen befestigt ist;
iii) eine Vorrichtung nach wie ii), wobei das Hüftteil bzw. das Kopfteil mittels des Griffs am Rahmen lösbar befestigbar ist;
iv) eine Vorrichtung wie die vorhergehenden, wobei das Hüft- bzw. Kopfteil zwei seitlich angeordnete Führungsvorrichtungen aufweist, durch die Rahmen und/oder Griff geführt werden;
v) eine Vorrichtung wie die vorhergehenden, wobei das Hüft- bzw. Kopfteil gepolstert oder polsterbar ist;
vi) eine Vorrichtung wie die vorhergehenden, wobei die Vorrichtung ein Rückenteil aufweist;
vii) eine Vorrichtung wie die vorhergehenden, wobei der Rahmen zwei Schenkel aufweist und wobei die Vorrichtung Führungsvorrichtungen aufweist, durch die die Schenkel geführt werden;
viii) eine Vorrichtung zum Transport von Gegenständen zum Tragen auf dem Rücken, aufweisend einen Rahmen, dadurch gekennzeichnet, daß die Vorrichtung eine Sitzfläche aufweist, die am Rahmen mittels Befestigungsvorrichtungen lösbar befestigbar ist;
ix) eine Vorrichtung wie unter viii), wobei die Vorrichtung ein Rückenteil aufweist und wobei die Sitzfläche am Rückenteil angeordnet und/oder lösbar befestigt werden kann;
x) eine Vorrichtung wie unter viii) oder ix), wobei die Sitzfläche Führungsvorrichtungen aufweist;
xi) eine Vorrichtung nach wie unter viii) bis x), wobei die Vorrichtung mittels mindestens eines Stabes so abgestützt werden kann, daß ein Sitzen auf der Sitzfläche und ein Anlehnen an das Rückenteil möglich ist;
xii) eine Vorrichtung wie unter viii) bis xi), wobei die Vorrichtung mittels zweier Seile (S1, S2) aufhängbar ist;
xiii) eine Vorrichtung wie unter viii) bis xii), wobei Seil am Griff und/oder an Führungsvorrichtungen und Seil am Rahmen befestigbar ist;
xiv) eine Vorrichtung wie unter viii) bis xiii), wobei, wobei Seil durch die Führungsvorrichtungen geführt wird;
xv) eine Vorrichtung wie unter viii) bis xiv), wobei die Vorrichtung einen Stab aufweist, der in der Nähe der Führungsvorrichtungen zu Stabilisierung der Sitzfläche angeordnet werden kann;
xvi) eine Vorrichtung wie unter viii) bis xv), wobei das Seil zwischen den Führungsvorrichtungen an mindestens einer Stelle mittels geeigneter Vorrichtungen am Boden befestigbar ist;
xvii) Vorrichtung zum Transport von Gegenständen zum Tragen auf dem Rücken, aufweisend einen Rahmen und einen Stauraum, dadurch gekennzeichnet, daß der Stauraum mindestens zwei Stauraumteile aufweist, die lösbar miteinander und/oder mit der Vorrichtung verbindbar sind, wobei die Stauraumteile modular und veränderlich miteinander verbindbar sind, und wobei der Stauraum oder ein Stauraumteil seitlich am Rahmen flexibel und/oder lösbar befestigbar ist;
xviii) eine Vorrichtung wie unter xvii), wobei der Stauraum mehrere miteinander und/oder mit der Vorrichtung lösbare verbindbare Stauraumteile aufweist, die zusammen den Stauraum bilden;
xix) eine Kombination einer oder mehrerer Vorrichtungen nach einer oder mehreren der vorangegangenen Ausführungsformen;
xx) eine Vorrichtung nach einer der vorhergehenden Ausführungsformen, wobei Vorrichtung durch Umklappen des Hüftteils zum Kopfteil und durch Befestigung der Sitzfläche am Rahmen in eine Liegevorrichtung umwandelbar ist, wobei die Sitzfläche so am Rahmen angeordnet ist, daß sie sich in in etwa einer Ebene mit dem Rückenteil von diesem weg in entegegengesetzter Richtung zum Kopfteil erstreckt;
xxi) eine Vorrichtung wie unter xx), wobei der Stauraum so von der Vorrichtung abgenommen oder weggeklappt werden kann, daß die Vorrichtung als in etwa ebene Liegevorrichtung auf dem Boden verwendbar ist;
xxii) eine Vorrichtung wie unter xx) oder xxi), wobei die Vorrichtung mittels mindestens eines Seils, das an mindestens zwei Befestigungsstellen befestigbar ist und durch die Führungsvorrichtungen geführt wird, aufhängbar ist;
xxiii) eine Vorrichtung wie unter xxii), wobei die Sitzfläche mittels Befestigungsvorrichtungen an der Vorrichtung und/oder dem Rahmen und mittels Befestigungsvorrichtungen am Seil so befestigbar ist, daß sie als Beinbereich dient;
xxiv) eine Vorrichtung wie unter xxii) oder xxiii), wobei das Seil mittels mindestens eines Stabes spreizbar ist;
xxv) eine Vorrichtung nach einer der vorhergehenden Ausführungsformen, wobei der Rahmen an der dem Griff entgegengesetzten Seite Rollen aufweist, so daß die Vorrichtung mittels des Griffes auf den Rollen rollend gezogen bzw. geschoben werden kann;
xxvi) eine Vorrichtung nach einer der vorhergehenden Ausführungsformen, wobei der Griff verstellbar mit dem Rahmen oder der Vorrichtung verbunden ist;
xxvii) eine Vorrichtung nach einer der vorhergehenden Ausführungsformen, wobei der Rahmen U-förmig ausgebildet ist, wobei die Basisverstrebung gebogen ist;
xxviii) eine Vorrichtung nach einer der vorhergehenden Ausführungsformen, wobei Rahmen, Hüftteil, Griff, Rückenteil, Sitz- bzw. Beinteil, und/oder Riemen gepolstert oder polsterbar ausgeführt sind;
xxix) eine Vorrichtung nach einer der vorhergehenden Ausführungsformen, wobei die Stangen identisch ausgebildet sind;
xxx) eine Vorrichtung nach einer der vorhergehenden Ausführungsformen, wobei mindestens eine Stange zum Transport im oder am Rahmen bzw. Griff angeordnet ist;
xxxi) eine Vorrichtung nach einer der vorhergehenden Ausführungsformen, wobei zwei Stangen derart zwischen Griff und Rahmen parallel zu deren Schenkeln angeordnet sind, so daß Riemen daran befestigbar sind;
xxxii) eine Vorrichtung wie unter xxxi), wobei Riemen flexibel und/oder höhenverstellbar an den Stangen befestigt sind;
xxxiii) eine Vorrichtung nach einer der vorhergehenden Ausführungsformen, wobei die Vorrichtung mit einer Schutzplane und/oder einem Moskitonetz überdeckt ist, wobei die Plane und/oder das Netz seitlich an der Vorrichtung herunterhängen;
xxxiv) eine Vorrichtung nach einer der vorhergehenden Ausführungsformen, wobei die Plane und/oder das Netz über ein oberhalb der Vorrichtung gespanntes Seil gehängt ist; und
xxxv) eine Vorrichtung nach einer der vorhergehenden Ausführungsformen, wobei die Plane und/oder das Netz seitlich an der Vorrichtung befestigbar oder mit dieser verbindbar ist.

Die Erfindung wird nachfolgend anhand bevorzugter Ausführungsbeispiele und der Zeichnungen erläutert. Er zeigen:
- Fig. 1:: Eine vereinfachte Prinzipdarstellung der erfindungsgemäßen Vorrichtung;
- Fig. 2:: Eine vereinfachte Prinzipdarstellung einer im Vergleich zu Fig. 1 horizontal um 180° gedrehten erfindungsgemäßen Vorrichtung;
- Fig. 3:: Eine dreidimensionale Prinzipdarstellung einer bevorzugten erfindungsge- mäßen Ausführungsform, wobei die Vorrichtung in eine Sitzvorrichtung um- gewandelt ist;
- Fig. 4:: Eine Vorrichtung gemäß Fig. 3, wobei die Vorrichtung als hängende Sitzvor- richtung ausgebildet ist;
- Fig.5:: Eine besonders bevorzugte Ausführungsform einer erfindungsgemäßen Vorrichtung, wobei die Vorrichtung in eine Liegevorrichtung umgewandelt ist, und wobei Fig. 5a eine dreidimensionale Teilansicht mit seitlich wegge- klapptem Stauraum, Fig. 5b eine Vorrichtung gemäß Fig. 5a in einer Schnittdarstellung, Fig. 5c eine dreidimensionale Ansicht teilbarer, modular aufgebauter Stauräume, und Fig. 5d eine Draufsicht auf eine erfindungsge- mäße Liegevorrichtung mit seitlich aufgeklappten Stauräumen zeigt;
- Fig. 6:: Eine beispielhafte dreidimensionale Prinzipdarstellung einer bevorzugten erfindungsgemäßen Ausführung, wobei die Vorrichtung als hängende Lie- gevorrichtung dargestellt ist.

In den einzelnen Figuren und Darstellungen wurde vereinzelt auf die Darstellung aller Elemente und Ausbildungen der Vorrichtung verzichtet, um eine einfache und übersichtliche Darstellung zu gewährleisten.

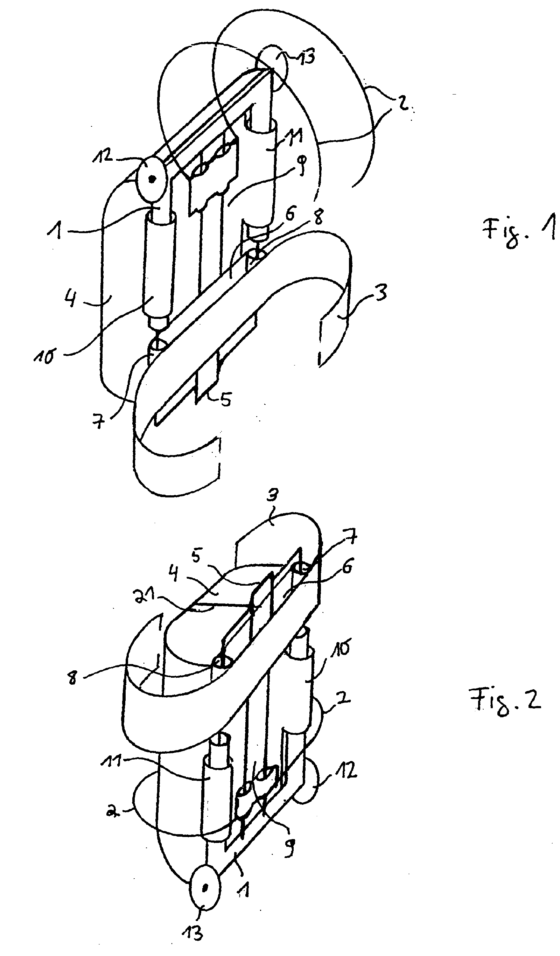

Figur 1 zeigt eine vereinfachte Prinzipdarstellung einer bevorzugten erfindungsgemäßen Vorrichtung zum Transport von Gegenständen zum Tragen auf dem Rücken. Die Vorrichtung weist ein Gestell 1, Schultergurte 2, einen Hüftgurt 3, einen Stauraum 4 sowie einen Griff 5 auf. Des weiteren weist die Vorrichtung in einer bevorzugten erfindungsgemäßen Ausführungsform ein Hüftteil 6 mit seitlichen Führungsvorrichtungen 7, 8 sowie ein Rückenteil 9 auf. In einer weiteren bevorzugten Ausführungsform weist die Vorrichtung Führungsvorrichtungen 10, 11 auf, die vorzugsweise mit dem Stauraum 4 oder dem Rückenteil 9 lösbar oder fest verbunden sind. Die Führungsvorrichtungen 7, 8, 10, und/oder 11 sind bevorzugt schlaufenförmig, ringförmig, rohrförmig, als Nut oder dergleichen ausgebildet. In einer weiteren bevorzugten erfindungsgemäßen Ausführungsform weist der Rahmen 1 im wesentlichen eine U-Form auf. In einer weiteren bevorzugten Ausführungsform ist der Rahmen 1 mit dem Griff 5, der im wesentlichen U-förmig ausgebildet ist, lösbar und/oder verstellbar verbunden. Diese Verbindung erfolgt bevorzugt durch ein teleskopartiges Ineinandergreifen der Schenkel des Rahmens 1 und des Griffes 5. Die Schenkel des Rahmens 1 werden bevorzugt durch die seitlichen Führungsvorrichtungen 10, 11 geführt, während die Schenkel des Griffes 5 bevorzugt durch die Führungsvorrichtungen 7, 8 geführt werden. Am Rahmen 1 sind in einer bevorzugten Ausführungsform an der dem Griff 5 entgegengesetzten Seite Rollen 12, 13 angeordnet. Diese sind bevorzugt seitlich im Bereich der Schnittstelle von Schenkeln und Basisteil des Rahmens angeordnet.

Figur 1 zeigt eine bevorzugte Ausführungsform einer erfindungsgemäßen Vorrichtung in Ausbildung als Rucksack in Tragestellung. Zum Tragen werden die angedeuteten Schulterriemen 2 so über die Schultern gelegt, daß die Vorrichtung am Rücken und besonders das Hüftteil 6 an der Hüfte der Trägers anliegt. Zur besseren Verteilung der Last und zur Erhöhung des Tragekomforts wird der Hüftgurt 3 um die Taille des Trägers befestigt. Die Riemen 2, 3 sind bevorzugt in ihrer Länge verstellbar.

Figur 2 zeigt eine vereinfachte Prinzipdarstellung einer bevorzugten erfindungsgemäßen Ausführungsform, wobei die Vorrichtung horizontal um 180° gedreht ist. Schultergurte 2 und Hüftgurt 3 sind zur Fixierung außen um den Stauraum 4 geschlungen. In einer weitern bevorzugten erfindungsgemäßen Ausführungsform sind die Gurte 2 und/oder 3 lösbar mit der Vorrichtung verbunden, so daß diese auch abgenommen werden können. In dieser Position läßt sich die Vorrichtung am Griff 5 fassen, und auf den Rollen 12, 13 über den Boden rollen. In einer besonders bevorzugten Ausführungsform ist Griff 5 höhenverstellbar, beispielsweise durch eine teleskopartige Verbindung mit dem Rahmen 1 ausgebildet. Des weiteren verfügt der herausziehbare Griff 5 bevorzugt über eine Rast- oder Einstellvorrichtung, mit der er in mindestens zwei Positionen (eingefahren, ausgefahren) arretierbar ist. Werden längere Strecken auf ebenem Gelände, beispielsweise auf Straßen oder auf Flughäfen zurückgelegt, kann die Vorrichtung somit durch den Benutzer bequem am Griff 5 gefaßt und auf den Rollen 12, 13 rollend gezogen werden.

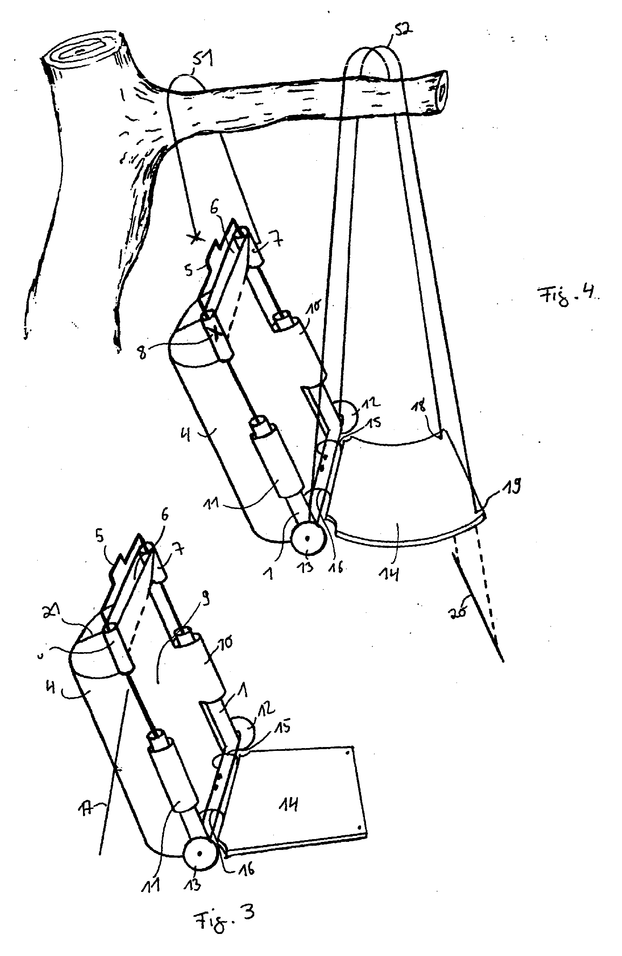

Figur 3 zeigt eine vereinfachte Prinzipdarstellung einer bevorzugten erfindungsgemäßen Ausführungsform, wobei die Vorrichtung in eine Sitzvorrichtung umgewandelt ist. Zum Umwandeln ist eine Vorrichtung gemäß Figur 1, zunächst wie in Figur 2 dargestellt, um 180° zu drehen. Des weiteren wird Griff 5, der mit dem Rahmen 1 teleskopartig verbunden ist, von diesem gelöst. Danach wird das Hüftteil 6, das seitliche Führungsvorrichtungen 7, 8 aufweist, um 180° nach oben geklappt. Ist dies geschehen, kann der Griff 5 wieder an dem Rahmen 1 befestigt werden, wobei die Schenkel des Griffs 5 durch die Führungsvorrichtungen 7, 8 des Hüftteils 6 geschoben werden. Griff 5 und Rahmen 1 werden in einer Zwischenstellung arretiert, wobei der Abstand zwischen Griff 5 und dem Basisteil des Rahmens 1 größer ist als zuvor. Durch das Hochklappen des Hüftteils 6 verlängert sich die Rückenfläche 9 um die Höhe des Hüftteils 6, so daß das Hüftteil 6 in der Sitzvorrichtung als Kopfteil bzw. Kopfstütze dient. Im nächsten Schritt wird Sitzfläche 14 mittels Befestigungsvorrichtungen 15, 16 an der Basisfläche bzw. Unterseite (beim Tragen Oberseite) des Rahmens 1 befestigt. An einen Baum, eine Wand oder Ähnliches gelehnt, dient die Vorrichtung nun als Sitzvorrichtung, wobei der Benutzer auf der Sitzfläche 14 sitzt, während er sich an die Rückenfläche 9 anlehnt, wobei Hüftteil 6 als Kopfstütze dient. Anstelle eines Baumes oder einer Wand kann die Sitzvorrichtung auch durch mindestens einen, vorzugsweise zwei Stäbe 17 in gewünschter Lage gestützt werden. In einer weiteren bevorzugten erfindungsgemäßen Ausführungsform sind Rahmen 1 und Griff 5 so angeordnet, daß ein Drehen der Vorrichtung um 180°, wie oben beschrieben, entfallen kann.

Die Sitzfläche 14 ist bevorzugt isoliert, gepolstert und/oder wasserdicht ausgeführt. In einer besonders bevorzugten erfindungsgemäßen Ausführungsform dient sie beim Tragen der Vorrichtung als Rucksack als Rückenpolster, wobei sie vorzugsweise von außen oder von innen an der Rückenfläche 9 angeordnet und/oder lösbar befestigt werden kann. In einer weiteren bevorzugten Ausführungsform ist die Sitzfläche aufblasbar ausgeführt.

Figur 4 zeigt eine besonders bevorzugte erfindungsgemäße Ausführungsform, wobei die Vorrichtung in eine hängende Sitzvorrichtung umgewandelt ist. Zur Umwandlung der Vorrichtung wird zunächst wie zu Figur 3 beschrieben vorgegangen. Ist die Vorrichtung zur Sitzvorrichtung umgewandelt, wird ein Seil S1 an einer der Führungsvorrichtungen 7, 8 des Hüftteils 6 eingehängt über einen Baum, Ast oder Ähnliches geführt, und an der anderen Führungsvorrichtung 7, 8 des Hüftteils 6 befestigt. Die Befestigung des Seils S1 an den Führungsvorrichtungen 7, 8 kann mittels Haken, Schnallen, Knoten oder ähnlicher Befestigungsarten bzw. unter Zuhilfenahme zusätzlicher Befestigungsvorrichtungen erfolgen. Ein Seil S2 wird an der Unterseite des Rahmens 1 vorzugsweise in der Umgebung einer der Rollen 12, 13 eingehängt über einen Baum, Ast oder Ähnliches zum Sitzteil 14 geführt. Das Sitzteil 14 weist in den der Vorrichtung abgewandten Ecken Führungsvorrichtungen 18, 19, die vorzugsweise als Löcher oder Bohrungen ausgeführt sind, auf. Das Seil S2 wird nun durch eine Führungsvorrichtung 18, 19 an der Unterseite der Sitzfläche 14 entlang und durch die andere Führungsvorrichtung 18, 19 geführt, über den Ast gehängt, und anschließend am Rahmen 1 der Vorrichtung bevorzugt in der Umgebung der Rolle 12 bzw. 13 befestigt, von der das Seil S2 nicht ausgeht. In einer weiteren bevorzugten Ausführungsform wird das Seil S1 am Griff 5 befestigt. In einer weiteren bevorzugten erfindungsgemäßen Ausführungsform wird das Seil S2 zwischen den Führungsvorrichtungen 18, 19 an mindestens einer Stelle mittels geeigneter Vorrichtungen (z.B. Hering) am Boden befestigt.

Durch die Aufhängung der Sitzvorrichtung mittels der Seile S1 und S2 wird eine hängende Sitzposition erreicht, die ein bequemes Sitzen oberhalb des Bodens gewährleistet. Somit wird das Aufsteigen von Feuchtigkeit vom Boden her, sowie die Erreichbarkeit durch Tiere vermieden.

In einer bevorzugten erfindungsgemäßen Ausführungsform weisen die Seile S1 und/oder S2 Möglichkeiten zur Längenverstellung auf, so daß die Sitzposition bequem justiert werden kann. Die Befestigung der Seile S1 und S2 an der Vorrichtung erfolgt vorzugsweise mittels Haken und Ösen, Schnallen, Karabinern, Knoten oder ähnlichen Befestigungsvarianten. Das Seil S2 wird vorzugsweise von seiner Befestigung am Rahmen 1 in der Nähe einer Rollen 12, 13 über den Ast zur diagonal zu der entsprechenden Rolle 12, 13 angeordneten Befestigungsvorrichtung 18, 19 geführt, und von der anderen Befestigungsvorrichtung 18, 19 ebenso diagonal zurück in die Nähe der entsprechenden Rolle 12, 13. In einer weiteren bevorzugten Ausführungsform wird zwischen den Vorrichtungen 18, 19, vorzugsweise auf der Unterseite der Sitzfläche 14, ein Stab oder ein Rohr 20 angeordnet, so daß die Stabilität der Sitzfläche 14 gewährleistet ist. In weiteren bevorzugten Ausführungsformen sind die Führungsvorrichtungen 18, 19 als Ösen, Schlaufen oder Ähnliches ausgeführt. In einer weiteren bevorzugten Ausführungsform sind die Führungsvorrichtungen 18, 19 sowie die Stange 20 durch ein auf der Unterseite der Sitzvorrichtung 14 angebrachtes Rohr, eine Nut oder Ähnliches kombiniert, durch das das Seil S2 geführt wird.

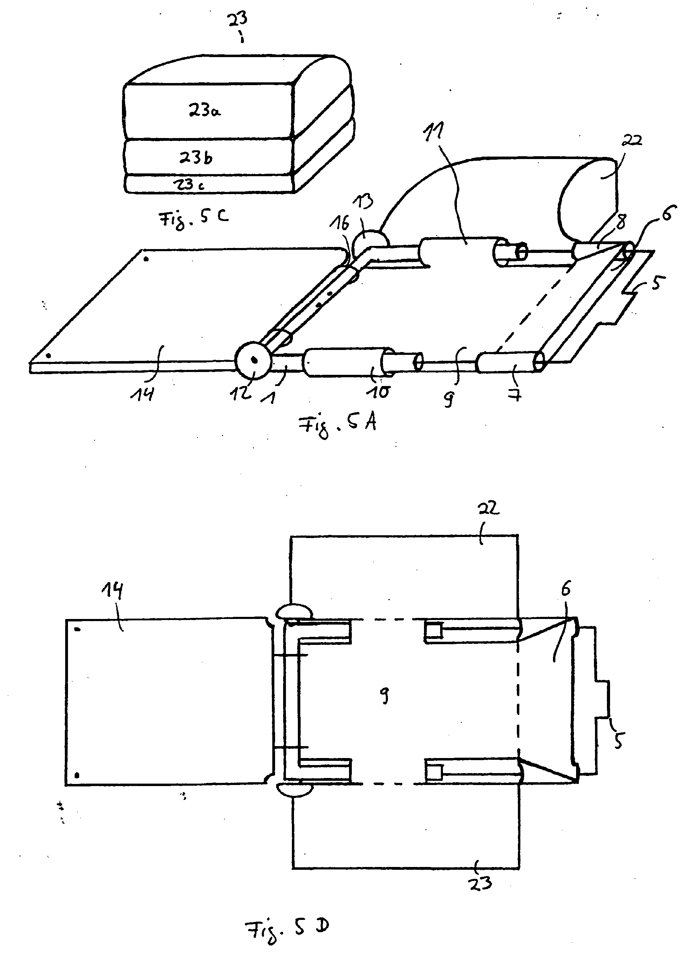

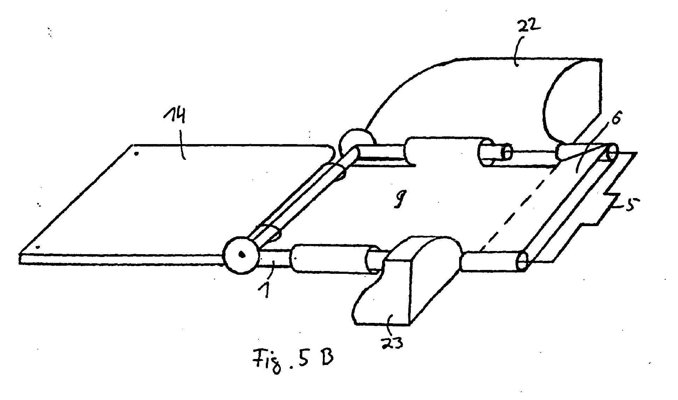

Figur 5 zeigt eine vereinfachte Prinzipdarstellung einer weiteren bevorzugten erfindungsgemäßen Ausführungsform, wobei die Vorrichtung in eine Liegevorrichtung umgewandelt ist. Figur 5a zeigt hierbei eine Schnittdarstellung der umgewandelten Vorrichtung. Wie in den voran beschriebenen Vorrichtungen wird der Handgriff 5 gelöst, das Hüftpolster 6 umgeklappt, und Handgriff 5 durch die Führungsvorrichtungen 7, 8 des Hüftteils 6 geführt und mit dem Rahmen 1 verbunden, wodurch das Hüftteil 6 fixiert wird. Sitzfläche 14 wird wie unter Figur 3 beschrieben an der dem Hüftteil 6 entgegengesetzten Seite des Rahmens 1 angeordnet und dient als Beinbereich. Der Stauraum 4 ist in dieser Ausführungsform abnehmbar und in einer besonders bevorzugten Ausführungsform teilbar, schwenkbar und/oder modular ausgebildet. In der dargestellten bevorzugten Ausführungsform ist der Stauraum 4 an einer entlang der Längsachse verlaufenden Verbindungsstelle 21 (Fig. 2-4) mittig in zwei Stauraumteile 22 bzw. 23 teilbar. Teile 22 und 23 sind bevorzugt entlang ihrer äußeren, dem Rahmen 1 zugewandten Längskanten mit diesen befestigt. Um Stauraum 4 bilden zu können, sind die Stauraumteile 22 und 23 entlang ihrer Verbindungsstelle bzw. ihres Trennbereichs 21 mittels Reißverschluß, Klettverschluß, Druckknöpfen, Hakenösen und/oder Ähnlichem verbindbar. Zur Umwandlung der Vorrichtung in die in Figur 5a dargestellte Liegevorrichtung werden die Stauraumteile 22 und 23 voneinander gelöst und seitlich entlang ihrer bevorzugt flexibel und/oder lösbar ausgeführten Verbindung mit dem Rahmen 1 nach außen weggeklappt oder gelöst. In Figur 5a ist vereinfachend nur der weggeklappte Stauraumteil 22 dargestellt, wohingegen in Figur 5b auch Stauraumteil 23 im Schnitt dargestellt ist.

Figur 5c zeigt eine bevorzugte Ausführungsform der Stauvorrichtung 4, dargestellt am Beispiel der Stauraumteils 23. Darstellungsgemäß ist Stauraumteil 23 modular aufgebaut und besteht aus Stauraumteilen 23a, 23b und 23c, die miteinander, beispielsweise mittels Reißverschlüssen, Klettverschlüssen, Druckknöpfen, Hakenösen, Knöpfen oder Ähnlichem verbunden sind. Jedes der Stauraumteile 23a, 23b und 23c bildet eine in sich geschlossene Stauraumeinheit. In einer bevorzugten erfindungsgemäßen Ausführungsform ist Stauraum 4 modular aufgebaut, so daß sämtliche Stauraumteile in verschiedenen Kombinationen lösbar miteinander verbindbar sind und gemeinsam den Stauraum 4 bilden. Der modulare Aufbau des Stauraums 4 ermöglicht es, verschiedene Arten oder Gruppen von zu transportierenden Gegenständen getrennt voneinander und einzeln zugänglich zu verstauen und zu transportieren. So können beispielsweise Kleidung, Toilettenartikel, Nahrungsmittel, Werkzeug etc. getrennt voneinander und einzeln zugänglich in verschiedenen Stauraumteilen verstaut werden.

Figur 5d zeigt eine Draufsicht auf die erfindungsgemäße Vorrichtung gemäß Figur 5a und Figur 5b. Hierbei sind die seitlich weggeklappten Stauraumteile 22 und 23 deutlich zu erkennen. In einer weiteren erfindungsgemäßen Ausführungsform muß Stauraum 4 nicht in zwei Stauraumteile geteilt werden, sondern kann als Ganzes in eine Richtung weggeklappt werden oder aber ist vollständig vom Rahmen 1 lösbar. In weiteren bevorzugten Ausführungsformen ist der Trennbereich 21 nicht mittig sondern seitlich versetzt oder quer angeordnet. Die Gestaltung des Stauraums 4 bzw. der einzelnen Stauraumteile ist abhängig von den konkreten Bedingungen des jeweiligen Einsatzes bzw. Einsatzbereichs.

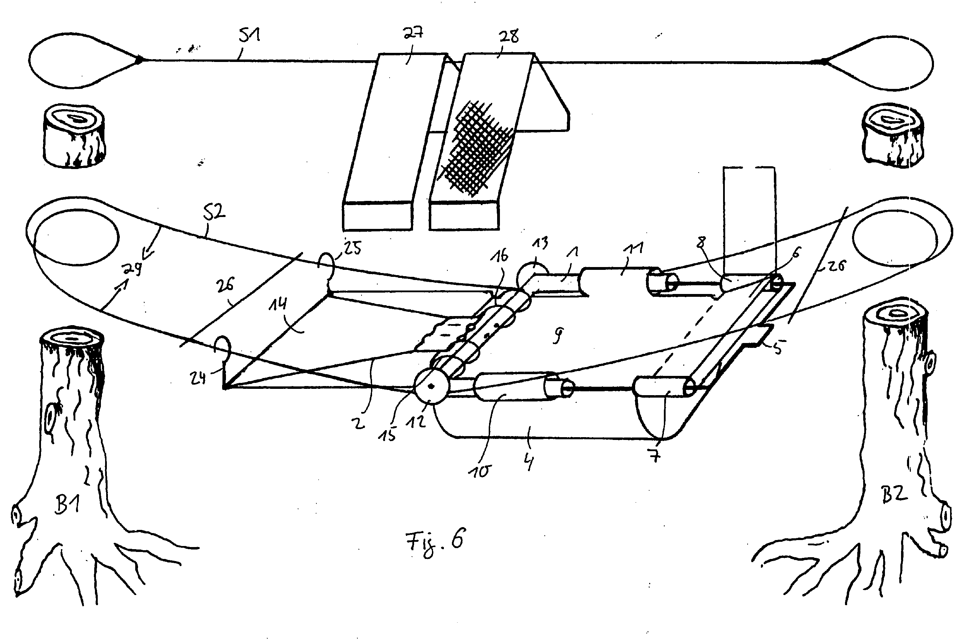

Figur 6 stellt eine weitere besonders bevorzugte erfindungsgemäße Ausführungsform dar, wobei die Vorrichtung in eine hängende Liegevorrichtung umgewandelt ist. Hierzu wird, wie bereits im Zusammenhang mit Fig. 5 beschrieben, das Hüftteil 6 zum Kopfteil hochgeklappt, und die Sitzfläche 14 bzw. der Beinbereich 14 am Rahmen 1 befestigt. Da die Liegevorrichtung im vorliegenden Fall nicht auf dem Boden aufliegt, kann auf ein Weggklappen oder Entfernen des Stauraums 4 bzw. einzelner Stauraumteile verzichtet werden. Zum Aufhängen der Liegevorrichtung werden zwei Bäume B1 und B2 oder ähnliche Hilfsvorrichtungen benötigt, die einen geeigneten Abstand zueinander aufweisen. Es ist auch möglich, die Vorrichtung an 3 oder 4 Bäumen oder dergleichen zu befestigen.

Zum Aufhängen wird ein Seil S2 einfach oder mehrfach um einen der Bäume B1 bzw. B2 geschlungen. Das Seil wird am Rahmen 1 im Bereich einer der Rollen 12, 13 befestigt, vorzugsweise durch Einhaken durch Führen durch eine Öse, eine Nut oder Ähnliches. Das Seil wird im weiteren Verlauf einfach oder mehrfach um den zweiten Baum B2 bzw. B1 geschlungen und zurück zu seinem Ausgangspunkt geführt, wobei es entsprechend am Rahmen 1 im Bereich der anderen Rolle 12, 13 angeordnet wird. Die Enden des Seils S2 werden so miteinander befestigt, daß sich die Liegevorrichtung in gewünschter Höhe und Position befindet. Die Enden der Seile können einfach verknotet oder mittels geeigneter Spannvorrichtung fest oder verstellbar miteinander verbunden werden. Auch eine einzelne Befestigung der Seilenden des Seils S2 an einem der Bäume B1 oder B2 ist möglich. Je nach bevorzugter Liegeposition kann das Seil wahlweise auch durch die seitlich am Rahmen 1 bzw. am Rückenteil 9 angebrachten Führungsvorrichtungen 10, 11 und/oder durch die am Hüftteil bzw. Kopfteil 6 angeordneten Führungsvorrichtungen 7, 8 geführt werden. In einer weiteren bevorzugten erfindungsgemäßen Ausführungsform ist der Rahmen 1 hohl gestaltet oder weist mehrere Ösen oder sonstige Führungsvorrichtungen auf, so daß das Seil zumindest über einen Teil der Länge des Rahmens 1 in diesem oder an diesem geführt oder befestigt werden kann. Zum Befestigen des Beinteils 14 werden/sind an dessen der Vorrichtung abgewandten äußeren Ecken Führungs- bzw. Befestigungsvorrichtungen 24, 25 angebracht, die in das Seil S2 eingehakt oder an diesem befestigt werden können. Um die Konstruktion zu stabilisieren und eine ausreichende Spreizung der Liegefläche zu gewährleisten, wird in einer bevorzugten Ausführungsform mindestens eine Stange 26 zwischen den parallel verlaufenden Zügen des Seil S2 vor dem Kopf- und/oder Fußende der Vorrichtung angeordnet, um die parallelen Seilzüge in einer vorbestimmten Entfernung zueinander zu führen. Durch die Stangen 26 wird verhindert, daß die Züge des Seils S2 zu nah aneinander verlaufen und somit eine Verschmälerung des Liegebereichs bzw. eine Verringerung der Stabilität bewirken. Dies ist vor allem bei Bäumen oder Befestigungselementen B1, B2 mit geringem Durchmesser notwendig.

In einer besonders bevorzugten Ausführungsform sind die Stangen 17, 20 und 26 identisch. In einer weiteren bevorzugten Ausführungsform sind beim Transport zwei Stangen 17, 20, 26 am Rahmen 1 bzw. Griff 5 oder im Hohl ausgeführten Rahmen 1 bzw. Griff 5 angeordnet. In einer weiteren bevorzugten Ausführungsform sind zwei Stangen 17, 20, 26 zwischen Griff 5 und Rahmen 1 parallel zu deren Schenkeln so angeordnet, daß Riemen 2 daran angeordnet sind. Die Verbindung zwischen Riemen 2 und Stangen 17, 20, 26 ist vorzugsweise flexibel und/oder höhenverstellbar ausgeführt. Stangen 17, 20, 26 sind bevorzugt als längenverstellbare Teleskopstangen ausgeführt.

Zur Stabilisierung des Beinbereichs 14 wird in einer bevorzugten erfindungsgemäßen Ausführungsform der Schultergurt 2 unterhalb des Beinbereichs 14 zwischen Rahmen 1 und Führungs- bzw. Befestigungsvorrichtungen 24, 25 angeordnet (zur Erhöhung der Übersichtlichkeit in Fig. 6 oberhalb dargestellt). Hierzu können die Schultergurte 2 an ihrer Unterseite von der Vorrichtung gelöst und unterhalb des Beinbereichs entlanggeführt und an den Vorrichtungen 24, 25 befestigt werden. In einer weiteren bevorzugten Ausführungsform werden die Schultergurte 2 vollständig von der Vorrichtung gelöst und zwischen den Rollen 12, 13 am unteren Teil des Rahmens 1 befestigt und zu den Vorrichtungen 24, 25 gespannt.

In einer weiteren bevorzugten erfindungsgemäßen Ausführungsform wird das Seil S1 oberhalb der hängenden Liegevorrichtung zwischen den Bäumen B1 und B2 gespannt. Schutzplane 27 und/oder Moskitonetz 28 werden über das Seil S1 gehängt, so daß sie die Liegevorrichtung überdecken und seitlich an dieser herunterhängen. In einer bevorzugten Ausführungsform können die Schutzplane 27 und/oder das Moskitonetz 28 an der Liegevorrichtung eingehängt bzw. befestigt werden. In einer weiteren bevorzugten Ausführungsform werden die im Kopf- und Beinbereich verbleibenden, im wesentlichen eine Dreiecksform aufweisenden Öffnungen, durch entsprechende Planen (nicht dargestellt) durch Befestigung an Schutzplane 27, Moskitonetz 28 und/oder der Liegevorrichtung verschlossen. Somit wird ein Schutz vor Umwelteinflüssen wie Regen und/oder Tieren bzw. Insekten, insbesondere Käfern, Fliegen, Mücken etc. gewährleistet.

Der Ein- bzw. Ausstieg auf bzw. aus der Liegevorrichtung kann grundsätzlich, wie von herkömmlichen Hängematten bekannt, seitlich erfolgen. In einer bevorzugten Ausführungsform ist es weiterhin möglich, den Beinbereich 14 vom Rahmen 1 zu lösen und in Richtung des Baumes B1 wegzuklappen oder zu schieben. Durch die sich so ergebende Öffnung entsteht ein Einstieg zwischen Vorrichtung Beinbereich und den Zügen des Seils S2, durch den sich der Benutzer auf das Rückenteil schwingen kann. Nach dem Hochheben oder seitlichem Herunterhängen der Beine wird der Beinbereich 14 wieder am Rahmen 1 befestigt, so daß die Beine anschließend gestreckt und auf dem Beinbereich 14 abgelegt werden können. Der Ausstieg erfolgt in umgekehrter Reihenfolge. Werden die Schultergurte 2 zur Unterstützung des Beinbereichs verwendet, werden diese ebenfalls zum Ein- bzw. Ausstieg vom Rahmen 1 gelöst.

In einer weiteren bevorzugten erfindungsgemäßen Ausführungsform wird die hängende Liegevorrichtung wie oben beschrieben in eine schaukelbare Liegevorrichtung, ähnlich einer Hängematte, umgewandelt. Hierzu werden die parallel verlaufenden Züge des Seils S2 zwischen Liegevorrichtung und Baum bzw. zwischen Stange 26 und Baum beidseitig an den Stellen 29 (nur dargestellt zwischen Vorrichtung und Baum B1) zusammengebunden. Grundsätzlich gilt, je näher sich die Züge des Seils S2 einander annähern, und je näher die Stelle 29 an Baum B1 bzw. B2 angeordnet ist, desto schwingfähiger ist die Liegevorrichtung.

Die einzelnen Elemente der Vorrichtung sind in bevorzugten erfindungsgemäßen Ausführungsformen gepolstert ausgeführt, vorzugsweise sind Bein- bzw. Sitzfläche 14, Rückenfläche 9 und Kopfteil bzw. Hüftteil 6, sowie die Übergänge zwischen den Teilen besonders gepolstert bzw. besonders polsterbar. Die Polsterung kann durch Schaumstoff, Aufblasen und Ähnlichem erfolgen. Weiterhin sind zumindest einige der einzelnen Elemente bzw. Komponenten der Vorrichtung gegen Kälte, Hitze und/oder Feuchtigkeit isoliert. Rahmen 1 ist in einer bevorzugten erfindungsgemäßen Ausführungsform im Basisbereich, zwischen den Rollen 12, 13, abgeflacht und gebogen ausgeführt, so daß er der Körperkontur sowohl bei der Verwendung als Rucksack, Sitzvorrichtung als auch bei der Verwendung als Liegevorrichtung angepaßt ist. In einer weiteren bevorzugten Ausführungsform ist der Rahmen 1 für einen erhöhten Trage-, Sitz- bzw. Liegekomfort gepolstert. In einer weiteren bevorzugten Ausführungsform der Erfindung sind die einzelnen Elemente derart gepolstert und weisen im Bezug zueinander eine solche Form auf, daß die einzelnen Vorrichtungen, ob Rucksack, Sitzvorrichtung oder Liegevorrichtung eine der Anatomie des Körpers angepaßte Form aufweisen. In bevorzugten erfindungsgemäßen Ausführungsformen sind die einzelnen Elemente verstellbar, z.B. durch Austauschbarkeit verschieden dimensionierter Polsterteile, und somit den individuellen Erfordernissen anpaßbar.

Die Verbindung der einzelnen Elemente der Vorrichtung kann auf unterschiedlichste Arten und Weisen erfolgen, wobei zur Erhöhung der Flexibilität bevorzugt möglichst einheitliche Verbindungsvorrichtungen verwendet werden. Zu diesen gehören bevorzugt Reißverschlüsse, Haken-Ösen-Verschlüsse, Klettverschlüsse, Knopf- bzw. Druckknopfverschlüsse, Verbindungen über verknotbare Seile etc.

Weitere bevorzugte erfindungsgemäße Ausführungsformen entstehen durch die Kombination einer, mehrerer oder der beschriebenen Ausführungsformen. Die Maße und Proportionen der Vorrichtung variieren von den in der Zeichnung dargestellten, da sie stark vom jeweiligen Einsatz und/oder von der Größe des Benutzers abhängen und dementsprechend variiert werden können.

Die erfindungsgemäße Vorrichtung hat den Vorteil, daß sie zum einen eine optimale Verstauung der zu transportierenden Gegenstände ermöglicht, zum anderen in eine bequeme Sitz- und/oder hängende Sitzvorrichtung umwandelbar ist und weiterhin in eine bequeme Liege- bzw. hängende Liegevorrichtung, die auch als hängendes Zelt verwendbar ist, umwandelbar ist. Hierdurch werden Masse und Volumen der zu transportierenden Gegenstände bei einer gleichzeitigen Maximierung der Funktion und Einsatzgebiete erreicht.

## Patentansprüche

1. Vorrichtung zum Transport von Gegenständen zum Tragen auf dem Rücken, aufweisend einen Rahmen (1), **dadurch gekennzeichnet, daß** die Vorrichtung eine Sitzfläche (14) und ein Hüftteil (6), das in ein Kopfteil (6) umwandelbar ist, aufweist, wobei das Hüftteil (6) am Rahmen (1) so lösbar befestigt ist, daß es zum Kopfteil (6) umklappbar und erneut am Rahmen (1) lösbar befestigbar ist.

2. Vorrichtung nach Anspruch 1, wobei das Hüftteil (6) bzw. das Kopfteil (6) mittels eines Griffs (5) am Rahmen (1) lösbar befestigbar ist.

3. Vorrichtung nach Anspruch 2, wobei das Hüft- bzw. Kopfteil (6) zwei seitlich angeordnete Führungsvorrichtungen (7, 8) aufweist, durch die Rahmen (1) und/oder Griff (5) geführt werden.

4. Vorrichtung nach einem der vorangegangen Ansprüche, wobei der Rahmen zwei Schenkel aufweist und wobei die Vorrichtung Führungsvorrichtungen (10, 11) aufweist, durch die die Schenkel geführt werden.

5. Vorrichtung nach Anspruch 5, wobei die Vorrichtung ein Rückenteil (9) aufweist und wobei die Sitzfläche (14) am Rückenteil (9) angeordnet und/oder lösbar befestigt werden kann.

6. Vorrichtung nach einem der vorangegangene Ansprüche, ferner aufweisend einen Stauraum (4), **dadurch gekennzeichnet, daß** der Stauraum mindestens zwei Stauraumteile (22, 23) aufweist, die lösbar miteinander und/oder mit der Vorrichtung verbindbar sind, wobei die Stauraumteile modular und veränderlich miteinander verbindbar sind, und wobei der Stauraum (4) oder ein Stauraumteil seitlich am Rahmen (1) flexibel und/oder lösbar befestigbar ist.

7. Vorrichtung nach Anspruch 17, wobei der Stauraum (4) mehrere miteinander und/oder mit der Vorrichtung lösbare verbindbare Stauraumteile (22, 23, 23a, 23b, 23c) aufweist, die zusammen den Stauraum (4) bilden.

8. Vorrichtung nach einem der vorangegangenen Ansprüche, wobei Vorrichtung durch Umklappen des Hüftteils (6) zum Kopfteil (6) und durch Befestigung der Sitzfläche (14) am Rahmen (1) in eine Liegevorrichtung umwandelbar ist, wobei die Sitzfläche (14) so am Rahmen (1) angeordnet ist, daß sie sich in in etwa einer Ebene mit dem Rückenteil (9) von diesem weg in entegegengesetzter Richtung zum Kopfteil (6) erstreckt.

9. Vorrichtung nach Anspruch 8, wobei der Stauraum (4) so von der Vorrichtung abgenommen oder weggeklappt werden kann, daß die Vorrichtung als in etwa ebene Liegevorrichtung auf dem Boden verwendbar ist.

10. Vorrichtung nach einem der vorangegangen Ansprüche, wobei die Vorrichtung mittels zweier Seile (S1, S2) aufhängbar ist.

11. Vorrichtung nach einem der vorangegangenen Ansprüche, wobei der Rahmen (1) an der dem Griff (5) entgegengesetzten Seite Rollen (12, 13) aufweist, so daß die Vorrichtung mittels des Griffes (5) auf den Rollen (12, 13) rollend gezogen bzw. geschoben werden kann.

12. Vorrichtung nach einem der vorangegangenen Ansprüche, wobei die Vorrichtung mit einer Schutzplane (27) und/oder einem Moskitonetz (28) überdeckt ist, wobei die Plane und/oder das Netz seitlich an der Vorrichtung herunterhängen.
